## Europäisches Patentamt

## European Patent Office

## Office européen des brevets

(19)

(11) Veröffentlichungsnummer: **0 064 772**
**B1**

(12) # EUROPÄISCHE PATENTSCHRIFT

(45) Veröffentlichungstag der Patentschrift:
**02.09.87**

(51) Int. Cl.⁴: **B 29 C 55/28,** B 31 B 23/00

(21) Anmeldenummer: **82104204.1**

(22) Anmeldetag: **13.05.82**

(54) **Vorrichtung zum Injizieren von Luft oder Gas in eine Schlauchfolienblase.**

(30) Priorität: **13.05.81 DE 3119006**

(43) Veröffentlichungstag der Anmeldung:
**17.11.82 Patentblatt 82/46**

(45) Bekanntmachung des Hinweises auf die Patenterteilung:
**02.09.87 Patentblatt 87/36**

(84) Benannte Vertragsstaaten:
**FR GB IT SE**

(56) Entgegenhaltungen:
**DE-A-2 114 035**
**DE-A-2 263 623**
**FR-E-94 237**

(73) Patentinhaber: **Windmöller & Hölscher,**
**Münsterstrasse 48- 52, D-4540 Lengerich i.W. (DE)**

(72) Erfinder: **Brinkmeier, Friedhelm, Kleiststrasse 1,**
**D-4540 Lengerich (DE)**
Erfinder: **Frommeyer, Heinrich, Adenauerstrasse**
**37, D-4506 Hagen (DE)**

(74) Vertreter: **Lorenz, Eduard, Rechtsanwälte Lorenz,**
**Eduard - Seidler, Bernhard Seidler, Margrit -**
**Gossel, Hans- K. Philipps, Ina, Dr.**
**Widenmayerstrasse 23, D-8000 München 22 (DE)**

EP 0 064 772 B1

## Beschreibung

Die Erfindung betrifft eine Vorrichtung zum Injizieren von Luft oder Gas in eine zwischen Abquetschwalzen in einer laufenden Schlauchfolienbahn gebildeten Blase nach dem Oberbegriff des Patentanspruchs 1.

Eine derartige Vorrichtung ist aus der FR-E-94 237 bekannt. Die vorbekannte Vorrichtung dient zum automatischen Nachinjizieren von Luft in eine zwischen Abquetschwalzen in einer Schlauchfolienbahn gebildete Blase. Sie weist eine mit Druckluft gespeiste Injektionsnadel auf und ist etwa in der Mittelebene der Schlauchfolie derart drehbar, daß die Nadelspitze die Schlauchwandung durchdringt, dann mit dem Schlauch mitläuft und anschließend nach einer von der Nadellänge abhängigen Strecke die Blase wieder verläßt.

Aufgabe der Erfindung ist es, eine Vorrichtung nach dem Oberbegriff des Patentanspruchs 1 zu schaffen, bei der auch bei dünnwandigen oder rissempfindlichen Folien ein Ausreißen des von der Injektionsnadel eingestochenen Loches verhindert wird, wenn diese auf eine der Folienlaufgeschwindigkeit entsprechende Umfangsgeschwindigkeit beschleunigt wird.

Erfindungsgemäß wird diese Aufgabe gelöst durch die im kennzeichnenden Teil des Patentanspruchs 1 angegebenen Merkmale. Es ist eine aus einer Auflaufkurve oder einem Führungsblech bestehende Einrichtung vorgesehen, die die Injektionsnadel bei ihrem Ausfahren auf eine der Geschwindigkeit der Schlauchbahn entsprechende Umfangsgeschwindigkeit beschleunigt, wodurch ein Ausreißen des von der Injektionsnadel eingestochenen Loches auch bei dünnwandigen oder rissempfindlichen Folien verhindert wird.

Vorteilhafte Weiterbildungen der Erfindung sind in den Unteransprüchen beschrieben. Nach einer besonders vorteilhaften Ausführungsform der Erfindung ist vorgesehen, daß der Träger aus einer Druckmittel-Kolben-Zylinder-Einheit besteht und an dem vorderen Ende der Kolbenstange ein Luftzuführungsstück mit der Injektionsnadel befestigt ist. Die obere Schwenkstellung der Nadel kann dabei durch einen Endschalter, beispielsweise einen Magnetschalter, bestimmt sein.

Zweckmäßigerweise ist der Zylinder der Druckmittel-Kolben-Zylinder-Einheit derart gelagert, daß er unter dem Gewicht seines vorderen, die Injektionsnadel und das Luftzuführungsstück tragenden Teils in seine Ausgangsstellung zurückkippt. Da die in die Schlauchblase eingeschossene Injektionsnadel von dem Folienschlauch mitgenommen wird, kann auf besondere Schwenkantriebe verzichtet werden.

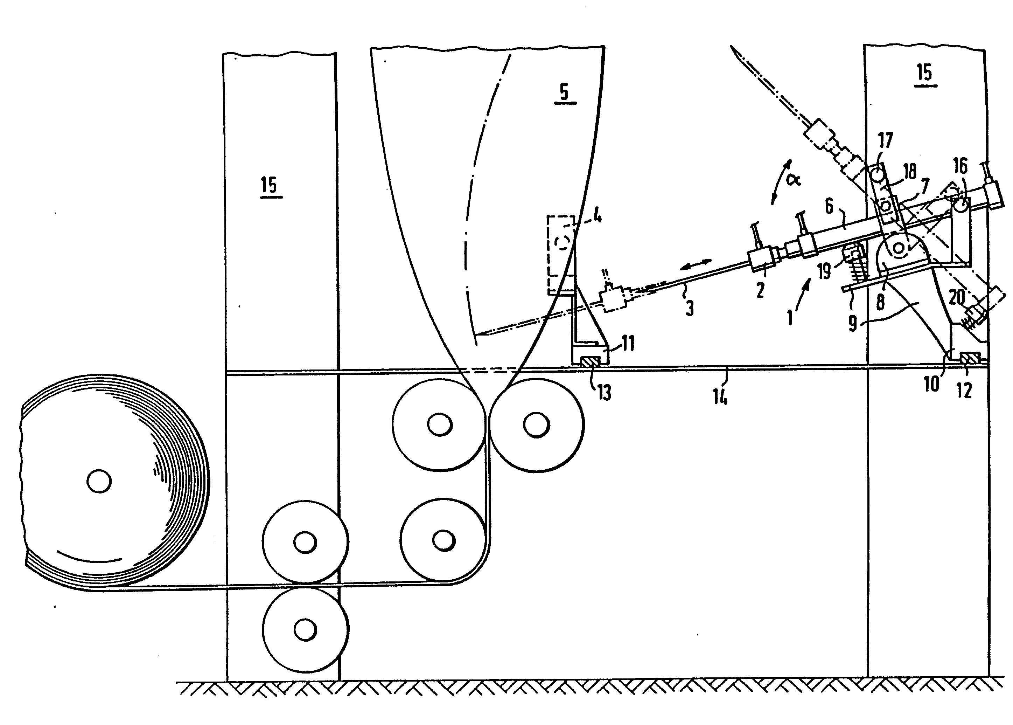

Ein Ausführungsbeispiel der Erfindung wird nachstehend anhand der Zeichnung näher beschrieben, in deren einziger Figur eine Seitenansicht einer Vorrichtung zum Injizieren von Blasluft in eine Schlauchblase dargestellt ist.

Im Rahmen 15 des Maschinengestells ist eine pneumatische Kolben-Zylinder-Einheit 1 schwenkbar gelagert. An dem vorderen Ende der Kolbenstange ist ein Luftzuführungsstück 2 mit einer Injektionsnadel 3 befestigt. Zeigt nun die Lichtschranke 4 an, daß der Durchmesser der Blase 5 unter ein bestimmt zulässiges Maß gesunken ist, wird der Kolben der pneumatischen Kolben-Zylinder-Einheit 1 ausgefahren und die Hohlnadel 3 in die Blase 5 eingeschossen. Gleichzeitig mit dem Einschießen der Nadel 3 wird auch die Nadel selbst über das Luftzuführungsstück 2 mit Luft beaufschlagt, so daß Luft in die Blase 5 eingeblasen wird. Während der weiteren Aufwärtsbewegung der Blase 5 wird die Injektionsnadel 3 (gestrichelte ausgefahrene Stellung) von der Blase 5 selbst mit nach oben um einen Winkel α bewegt, wobei der Zylinder 6 der Kolbenzylindereinheit 1 verschwenkt wird. Zu diesem Zweck ist der Zylinder 6 von einer Konsole 7 gehalten, die schwenkbar in einem Lagerbock 8 gelagert ist, der über einen Halter 9 an einem Führungsstück 10 befestigt ist. Dieses Führungsstück 10 ist ebenso wie das Führungsstück 11, mit dem die Lichtschranke 4 verbunden ist, auf Schienen 12 bzw. 13 verfahrbar. Diese Schienen 12 und 13 sind auf einer Quertraverse 14 aufgeschraubt, die mit dem Maschinenrahmen 15 fest verbunden ist. Der Schwenkweg der Kolben-Zylinder-Einheit 1 wird durch einen an dem Halter 9 befestigten Magnerschalter 16 bestimmt, der von einer Magnetplatte 17 beaufschlagt wird. Diese Magnetplatte 17 ist über einen verstellbaren Arm 18 befestigt, so daß durch Verstellung der Magnetplatte 17 der Schwenkwinkel α und damit der Eingriff der Injektionsnadel in der Blase verändert werden kann. Sobald nun also die Magnetplatte 17 in den Bereich des Magnetschalters 16 gelangt, wird zum einen die zu injizierende Luft abgestellt und zum anderen die Luft für die Kolben-Zylinder-Einheit 1 umgesteuert, so daß der Kolben in den Zylinder 6 einfährt. Der Zylinder 6 fällt dann aufgrund seines Eigengewichts in seine Grundstellung zurück. Dabei wird durch einen Puffer 19, der an dem Halter 9 befestigt ist, der Aufprall gemindert. Weil Blasen mit unterschiedlichen Geschwindigkeiten gefahren werden können, ist es zudem zweckmäßig, einen weiteren Puffer 20 vorzusehen, der mit dem Führungsstück 10 verbunden ist. Dieser Puffer 20 hindert den Zylinder 6 daran, aufgrund seiner Massenkraft auch dann noch weiter im Uhrzeigersinn zu verschwenken, wenn die Injektionsnadel 3 bereits aus der Blase 5 herausgefahren ist.

In der Praxis wird nun nicht immer mit nur einer Blase gefahren. Vielmehr versucht man, um einen möglichst hohen Materialausstoß zu erreichen, mehrstufig zu fahren. D.h., es sind in einer einzigen Maschine mehrere Blasen nebeneinander angeordnet. Folgedessen müssen soviel Injektionsnadeln 3 vorhanden sein, wie die maximal zu fahrende Anzahl von Blasen. Sollen nun beispielsweise statt drei Blasen nur zwei größere Blasen gefahren werden, ist es erforderlich, einer von drei Injektionsnadeln in Wartestellung und die zwei anderen Injektionsnadeln in Arbeitsposition zu bringen. Um dies zu erreichen, sind sowohl die Fotozellen wie auch die pneumatischen Kolben-Zylinder-Einheiten wie beschrieben auf den Schienen 13 bzw. 12 verfahrbar.

**Patentansprüche**

1. Vorrichtung zum Injizieren von Luft oder Gas in eine zwischen Abquetschwalzen in einer laufenden Schlauchfolienbahn gebildeten Blase (5) mit einer Injektionsnadel (3), wobei in ejner durch die Schlauchfolienmittellinie verlaufenden Ebene ein Träger um eine quer zu dieser Ebene liegende Achse bewegbar gelagert ist, dadurch gekennzeichnet, daß der Träger frei hin- und herschwenkbar gelagert ist und daß in dem Träger eine mit Druckluft oder Druckgas gespeiste Injektionsnadel (3) längsverschieblich geführt und in ihrer dem Blaseneingang zugewandten unteren Schwenkstellung zum Durchstechen der Blasenwandung ausfahrbar, in ihrer oberen Schwenkstellung zurückziehbar und in ihrer zurückgezogenen Stellung von ihrer oberen in ihre untere Schwenkstellung rückführbar ist und daß eine aus einer Auflaufkurve oder einem Führungsblech bestehende Einrichtung vorgesehen ist, die die Injektionsnadel (3) bei ihrem Ausfahren auf eine der Geschwindigkeit der Schlauchbahn entsprechende Umfangsgeschwindigkeit beschleunigt.

2. Vorrichtung nach Anspruch 1, dadurch gekennzeichnet, daß der Träger aus einer Druckmittel-Kolben-Zylinder-Einheit (1) besteht und an dem vorderen Ende der Kolbenstange ein Luftzuführungsstück (2) mit der Injektionsnadel (3) befestigt ist.

3. Vorrichtung nach Anspruch 1 oder 2, dadurch gekennzeichnet, daß die obere Schwenkstellung der Nadel (3), in der diese zurückgefahren wird, von einem Endschalter (16, 17) bestimmt ist.

4. Vorrichtung nach einem der Ansprüche 1 bis 3, dadurch gekennzeichnet, daß der Zylinder der Druckmittel-Kolben-Zylinder-Einheit (1) derart gelagert ist, daß er unter dem Gewicht seines vorderen, die Injektionsnadel (3) und das Luftzufüh rungsstück (2) tragenden Teils in seine Ausgangsstellung zuruckkippt.

5. Vorrichtung nach einem der Ansprüche 1 bis 4, dadurch gekennzeichnet, daß die Endstellung des Trägers oder Zylinders begrenzende Puffer (19, 20) vorgesehen sind.

**Claims**

1. Apparatus for injecting air or gas by means of an injecting needle (3) into a parison (5), which is formed in a tubular film moving between pinch rolls, wherein a carrier is provided, which extends in a plane that extends through the center line of the tubular film, and said carrier is mounted to be movable about an axis that is transverse to said plane, characterized in that the carrier is mounted to be freely pivotally reciprocable, an injecting needle (3), which is supplied with compressed air or compressed gas, is longitudinally slidably guided in the carrier and when said needle is in its lower angular position and faces the entrance of the parison the needle is extensible to pierce through the wall of the parison, when said needle is in its upper angular position the needle is retractable, and when the needle has been retracted it is movable from its upper to its lower angular position, and means are provided which comprise a run-up cam or a guide plate and accelerate the injecting needle (3) to a peripheral velocity corresponding to the velocity of the tubular film as the needle is extended.

2. Apparatus according to claim 1, characterized in that the carrier consists of a fluid-operable piston-cylinder unit (1) and an air supply fitting (2) provided with the injecting needle (3) is secured to the forward end of the piston rod.

3. Apparatus according to claim 1 or 2, characterized in that the upper angular position of the needle (3) in which position the needle is retracted, is defined by a limit switch (16, 17).

4. Apparatus according to any of claims 1 to 3, characterized in that the cylinder of the fluid-operable piston-cylinder unit (1) is movably mounted in such a manner that the cylinder tilts back to its initial position under the weight of its forward portion, which carries the injecting needle (3) and the air supply fitting (2).

5. Apparatus according to any of claims 1 to 4, characterized in that buffers (19, 20) are provided for defining the end position of the carrier or cylinder.

**Revendications**

1. Dispositif pour injecter de l'air ou du gaz dans une bulle (5) de film tubulaire avançant entre des rouleaux d'écrasement, au moyen d'une aiguille d'injection (3) comportant un support placé sur un plan s'étendant le long de la ligne médiane du film tubulaire et pouvant être déplacé autour d'un axe logé transversalement par rapport à ce plan, caractérisé en ce que le support est logé de manière à pouvoir effectuer librement un mouvement de va-et-vient et en ce que dans ce support est logé une aiguille d'injection (3) alimentée en air ou en gaz comprimé, de manière à pouvoir être déplacée en direction longitudinale et à pouvoir être avancée dans sa position de pivotement inférieure du côté de l'entrée de la bulle pour percer la paroi de la bulle, à être retirée dans sa position de pivotement supérieure et à pouvoir être ramenée de cette position rétractée supérieure à sa position de pivotement inférieure et qu'un dispositif est prévu constistant en un plan incliné ou une tôle de guidage qui accélère l'aiguille d'injection (3) à une vitesse périphérique correspondant à la vitesse du film tubulaire dans son mouvement de sortie.

2. Dispositif selon la revendication 1, caractérisé en ce que le support consiste en une unité piston/cylindre commandée par fluide (1) et que sur l'extrémité avant de la tige piston est fixé une pièce d'alimentation en air (2) à l'aiguille dd'injection (3).

3. Dispositif selon la revendication 1 ou 2, caractérisé en ce que la position de pivotement supérieure de l'aiguille (3) dans laquelle l'aiguille est rétractée, est déterminée par un commutateur de fin de course (16, 17).

4. Dispositif selon l'une des revendications 1 à 3, caractérisé en ce que le cylindre de l'unité de piston/cylindre commandé par fluide (1) est logé de manière à ce qu'il bascule dans sa position de départ sous le poids de sa partie avant portant l'aiguille d'injection (3) et la pièce d'alimentation en air (2).

5. Dispositif selon l'une des revendications 1 à 4, caractérisé en ce que des butées (19, 20) sont prévues pour limiter la position terminale du support ou du cylindre.